# EUROPÄISCHE PATENTSCHRIFT

(11) **EP 1 816 368 B1**
(45) Veröffentlichungstag und Bekanntmachung des Hinweises auf die Patenterteilung: **14.04.2010**
(21) Anmeldenummer: 06002156.5
(22) Anmeldetag: 02.02.2006
(51) Int. Cl.: F16D 27/105

(54) **Schlingfederkupplung**
Wrap spring clutch
Embrayage à ressort hélicoidal

(43) Veröffentlichungstag der Anmeldung: 08.08.2007
(73) Patentinhaber: Hoerbiger Antriebstechnik GmbH, 86956 Schongau (DE)
(72) Erfinder: Ackermann, Jürgen, Dr., 86875 Waal (DE); Nickel, Falk, 86925 Fuchstal (DE)
(74) Vertreter: Kitzhofer, Thomas

(56) Entgegenhaltungen:
- US-A- 2 534 034
- US-A- 4 250 984
- US-B1- 6 247 569
- PATENT ABSTRACTS OF JAPAN Bd. 1998, Nr. 09, 31. Juli 1998 (1998-07-31) & JP 10 089377 A (CANON INC), 7. April 1998 (1998-04-07)

## Beschreibung

Die Erfindung betrifft eine Schlingfederkupplung gemäß dem Oberbegriff des Anspruches 1.

Eine derartige Schlingfederkupplung ist aus der US 4,250,984 A bzw der US 2,534,034 A bekannt.

Im Zuge der Automatisierung und elektronischen Regelung von Antrieben für Maschinen und Kraftfahrzeuge hat die Bedeutung von Kupplungen mit entsprechenden Eigenschaften zugenommen. Die Kernanforderungen sind eine hohe Drehmomentvariabilität, kurze Reaktionszeit, kleiner Bauraum, geringer Aufwand und Energiebedarf des Kupplungsaktuators, hohe Zuverlässigkeit und möglichst konstantes Verhalten über den gesamten Lebensdauerzyklus. Zur Anwendung kommen heute vor allem Lamellenkupplungen mit unterschiedlichen Aktuatorsystemen. Diese können elektrisch, elektro-hydraulisch, pneumatisch, mechanisch oder mit MRF/ERF ausgeführt sein. Bei den bekannten Systemen ist der Aufwand mit zunehmendem Drehmomentbedarf sowohl für den übertragenden Teil als auch das Aktuatorsystem hoch. Die Integration des Systems ist zunehmend schwieriger und die Kosten hierfür steigen.

Die dem Oberbegriff des Anspruches 1 entsprechende Schlingfederkupplung ist als passives Element, z.B. als Drehmomentbegrenzer, oder als aktives Element in Ausführungen eingesetzt worden, die jedoch nur eine An-/Aus-Funktion haben.

Es ist daher Aufgabe der vorliegenden Erfindung, eine Schlingfederkupplung der im Oberbegriff des Anspruches 1 angegebenen Art zu schaffen, die eine regelbare Drehmomentübertragung ermöglicht und dadurch z.B. in automatisierten geregelten Antriebssträngen, vor allem in Kraftfahrzeugantriebssträngen, als aktives Bauteil eingesetzt werden kann.

Die Lösung dieser Aufgabe erfolgt durch die Merkmale des Anspruchs 1.

Zu den besonderen Vorteilen der erfindungsgemäßen Schlingfederkupplung zählt im Vergleich zu bisher bekannten aktiven Kupplungssystemen zunächst die Erreichung eines niedrigen Schleppmomentes sowie eine geringe Masse und Massenträgheit. Ferner benötigt die erfindungsgemäße Schlingfederkupplung nur einen kleinen Bauraum und hat einen niedrigen Energiebedarf, der beispielsweise durch ein normales Fahrzeugbordnetz abgedeckt werden kann.

Ferner ist die erfindungsgemäße Schlingfederkupplung wenig anfällig aufgrund einer geringen Komplexität des Systems, sie benötigt keine Zusatzaggregate und zeichnet sich durch niedrige Herstellungs- und Wartungskosten aus.

Die Unteransprüche haben vorteilhafte Weiterbildungen der Erfindung zum Inhalt.

Weitere Einzelheiten, Vorteile und Merkmale der Erfindung ergeben sich aus nachfolgender Beschreibung einer Ausführungsform anhand der Zeichnung. Es zeigt:
- Fig. 1: eine stark schematisch vereinfachte Stirnansicht des generellen Aufbaues einer Schlingfederkupplung,
- Fig. 2: eine schematisch stark vereinfachte Stirnansicht einer erfindungsgemäßen Schlingfederkupplung, und
- Fig. 3: eine ebenfalls schematisch stark vereinfachte Seitenansicht der Schlingfederkupplung gemäß Fig. 2.

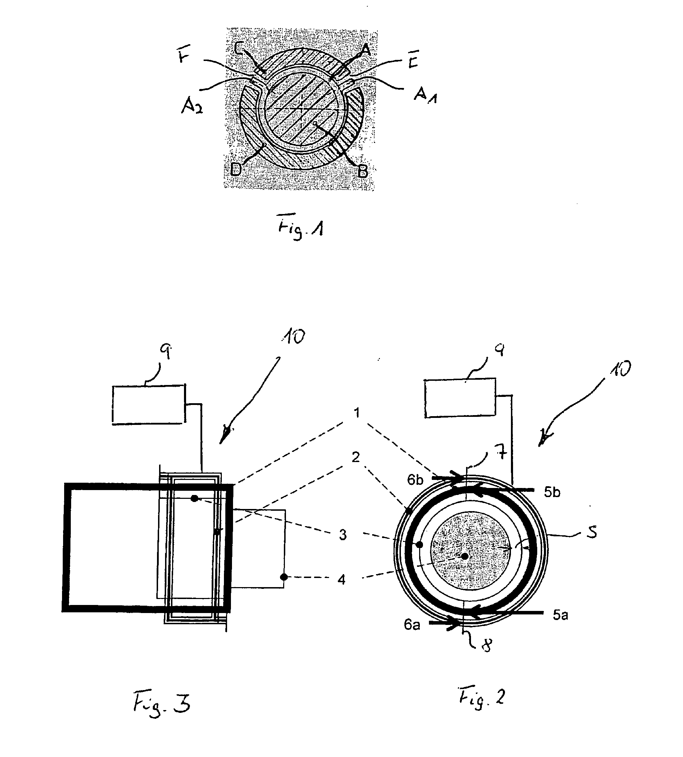

In Fig. 1 ist zur Erläuterung eines generell möglichen Aufbaues einer Schlingfederkupplung eine Schlingfeder A dargestellt, die mit Vorspannung auf einer fixierten Achse B angeordnet ist. An den beiden in oder durch Ausnehmungen E und F ragenden Federenden A1 und A2 greift je nach Drehrichtung ein Segment C eines Antriebsteils an. Bei Last am Abtrieb wird durch Formschluss über das jeweilige Federende A1 bzw. A2 und ein Segment D mitgedreht. Entsteht am Abtrieb ein Drehmoment, welches den Antrieb überholen will, blockiert das Segment D über das jeweilige Federelement A1 bzw. A2 der Schlingfeder A.

Dieses System bedingt ein minimales Spiel zwischen den Flanken der Segmente C und D und den Federenden A1 und A2 und ist drehrichtungsunabhängig. Die Wicklungsrichtung der Schlingfeder A hat ebenfalls keinen Einfluss auf die Funktion.

Anstelle einer fixierten Achse B kann ein entsprechender Aufbau in einer in Fig. 1 nicht näher dargestellten Hülse in einem Gehäuse vorgesehen sein. Die Enden A1 und A2 der Schlingfeder A sind dann entsprechend nach innen gebogen.

Die in den Fig. 2 und 3 dargestellte Schlingfederkupplung 10 weist eine erste Welle 4 auf, die von einer Schlingfeder 3 umgeben ist, wobei die Schlingfeder 3 in einer definierten Wickelrichtung um die erste Welle 4 herum gewickelt ist und zwei sich im Beispielsfalle in entgegengesetzter Richtung radial erstreckende Schlingfederenden 7 und 8 aufweist.

Ferner weist die Schlingfederkupplung 1 eine zweite hohle Welle 1 auf, die konzentrisch zur ersten Welle 4 um die Schlingfeder 3 herum angeordnet ist. Diese zweite Welle 1 weist bei der dargestellten Ausführungsform eine in der Zeichnung aufgrund der schematischen Vereinfachung nicht näher dargestellte Ausnehmung auf, so dass die zweite Welle 1 nur in Wickelrichtung der Schlingfeder 3 gegen die radialen Schlingfederenden 7 und 8 stoßen kann.

Die erfindungsgemäße Schlingfederkupplung 10 weist ferner einen Aktuator 2 auf, der zur Aufbringung einer geregelten Tangentialkraft auf zumindest eines der Schlingfederenden 7 bzw. 8 entgegen der Wickelrichtung der Schlingfeder 3 vorgesehen ist. Durch das Vorsehen dieses Aktuators 2 und seiner Wirkung auf das bzw. die Schlingfederenden 7 bzw. 8 entgegen der Wickelrichtung wird erreicht, dass die Drehmomentübertragung der erfindungsgemäßen Schlingfederkupplung 10 regelbar ist, da durch die Regelbarkeit der Aufbringung der Tangentialkraft im Gegensatz zu bisher bekannten Schlingfederkupplungen mit reiner An-/Aus-Funktion auch Zwischenzustände erreichbar sind, in denen die Schlingfeder 3 gezielt Schlupf zulässt, was die Regelung des zu übertragenden Drehmomentes möglich macht.

Hierzu können die Kontaktflächen der Schlingfeder 3 und der ersten Welle 4 wahlweise ohne oder mit gleicher oder unterschiedlicher Beschichtung versehen sein. Diese Beschichtungen können vorzugsweise aus Papier, Karbon, Sintermaterialien oder Molybdän bestehen.

Die Reibflächen können ferner trocken oder in einem Fluid, vorzugsweise Öl, gegeneinander laufen.

Wie zuvor bereits erläutert wurde, kann die zweite Welle 1 über die Schlingfeder 3 mit der ersten Welle 4 über ein regelbares Drehmoment in Verbindung gebracht werden.

Der über der zweiten Welle 1 angeordnete Aktuator 2 kann beispielsweise in Form eines elektrischen Stellmotors ausgeführt werden. Vorzugsweise kann der Aktuator 2 bei einer Ausführungsform der erfindungsgemäßen Schlingfederkupplung mit einer Drehrichtung auf das entsprechende Schlingfederende 7 bzw. 8 entgegen der Wickelrichtung eine geregelte Kraft in tangentialer Richtung ausüben. Bei einer ebenfalls denkbaren Ausführungsform mit wählbarer Drehrichtung kann der Aktuator das entsprechende Schlingfederende 7 bzw. 8 mit einer geregelten Kraft belasten.

Die Funktionsweise der erfindungsgemäßen Schlingfederkupplung 10 ist wie folgt:
Über die Welle 4 wird ein Drehmoment eingeleitet. Abhängig von der Drehrichtung kommt die Welle 1 mit einer Fläche der Ausnehmung an einem der beiden Schlingfederenden 7 bzw. 8 zur Anlage und es baut sich eine Kraft auf, die in Fig. 2 mit den Pfeilen 5A bzw. 5B gekennzeichnet ist. Durch diese Kraft wird die Schlingfeder 3 zugezogen. Die Schlingfeder 3 kommt hierbei an ihrem Innendurchmesser auf der Welle 4 zur Anlage. Aus der Reibungskraft zwischen der Welle 4 und der Schlingfeder 3 resultiert das übertragene Drehmoment und gleichzeitig eine mit dem übertragenen Drehmoment zunehmende Anpressung der Schlingfeder 3 mit entsprechend zunehmender Reibkraft. Ohne Einsatz des Aktuators 2 stellt sich das Drehmoment durch Selbstverstärkung auf das Maximaldrehmoment der Schlingfederkupplung 10 ein.

Grundsätzlich sind folgende Ausführungen der erfindungsgemäßen Schlingfederkupplung 10 denkbar:
Der Aktuator 2 kann mit der Welle 1 rotieren. Das Drehmoment wird mit dem Aktuator 2 geregelt, indem dieser das freie Schlingfederende 7 bzw. 8 mit einer geregelten Kraft (Pfeile 6A bzw. 6B in Fig. 2) beaufschlagt. Auf diese Weise wird die Schlingfeder 3 entlastet und das übertragbare Drehmoment reduziert. Die Bestimmung der Stellkraft und damit das übertragbare Drehmoment kann als feste Stellgröße vorgegeben werden.

Bevorzugterweise ist der Aktuator 2 in ein Regelsystem integriert, das in die Fig. 2 und 3 durch den Block 9 symbolisiert ist. Das Drehmoment wird dann in Abhängigkeit geeigneter Parameter, z.B. des Radschlupfes oder der Drosselklappenstellung bei Kraftfahrzeugen, direkt oder indirekt vorgegeben.

Eine zweite denkbare Ausführungsform der erfindungsgemäßen Schlingfederkupplung 10 entspricht in ihrer prinzipiellen Funktionsweise der zuvor erläuterten ersten Ausführungsform. Der Aktuator 2 ist bei dieser Ausführungsform an einem in den Fig. 2 und 3 nicht näher dargestellten Gehäuse befestigt. Das Drehmoment wird mit dem Aktuator 2 geregelt, indem dieser das jeweils freie Schlingfederende 7 bzw. 8 mit einer geregelten Kraft 6A bzw. 6B beaufschlagt. Auf diese Weise wird die Schlingfeder 3 entlastet und das übertragbare Drehmoment reduziert. Dazu wird ein in den Fig. 2 und 3 nicht näher dargestelltes Druckelement des Aktuators 2 gegebenenfalls dem entsprechenden Schlingfederende 7 bzw. 8 nachgeführt. Auf diese Weise lässt sich je nach Anforderung auch direkt ideal die Drehzahl regeln.

Bei einer dritten denkbaren Ausführungsform der erfindungsgemäßen Schlingfederkupplung 10 entspricht deren prinzipielle Funktionsweise wieder den Ausführungsformen 1 und 2. Bei dieser Ausführungsform kann jedoch der Aktuator 2 in die Welle 4 integriert werden. Auch bei dieser Ausführungsform wird das Drehmoment mit dem Aktuator 2 geregelt, indem dieser wiederum das jeweils freie Schlingfederende 7 bzw. 8 mit der geregelten Kraft 6A bzw. 6B beaufschlagt. Auch bei dieser Ausführungsform wird auf diese Weise die Schlingfeder 3 entlastet und das übertragbare Drehmoment reduziert. Das auch bei dieser Ausführungsform vorgesehene Druckelement des Aktuators 2 wird gegebenenfalls dem entsprechenden Schlingfederende 7 bzw. 8 nachgeführt. Somit kann auch bei dieser Ausführungsform, je nach Anforderung, auch direkt ideal die Differenzdrehzahl zum Motor, vorzugsweise Verbrennungsmotor, geregelt werden.

### Bezugszeichenliste

- 1: Zweite hohle Welle
- 2: Aktuator
- 3: Schlingfeder
- 4: Erste Welle
- 5A, 5B: Kraftpfeile
- 6A, 6B: Kraftpfeile'
- 7, 8: Schlingfederenden
- 9: Regeleinrichtung
- 10: Schlingfederkupplung
- A: Schlingfeder
- B: Fixierte Achse
- A1, A2: Federenden
- C, D: Segmente

## Patentansprüche

1. Schlingfederkupplung (10)
- mit einer ersten Welle (4);
- mit einer Schlingfeder (3), die um die erste Welle (4) in einer Wickelrichtung herumgewickelt ist und zwei Schlingfederenden (7, 8) aufweist; und
- mit einer zweiten hohlen Welle (1), die konzentrisch zur ersten Welle (4) um die Schlingfeder (3) herum angeordnet ist;
**gekennzeichnet durch**
- einen Aktuator (2) zur Aufbringung einer geregelten Tangentialkraft auf zumindest eines der Schlingfederenden (7, 8) entgegen der Wickelrichtung der Schlingfeder (3), **durch** die die erste Welle (4) und die zweite Welle (1) zur Übertragung eines regelbaren Drehmoments in Verbindung bringbar sind,
wodurch Zwischenzustände der Schlingfeder (3) zwischen ihrer AN-/AUS-Funktion zur Erreichung eines gezielten Schlupfes der Schlingfeder erzielbar sind.

2. Schlingfederkupplung nach Anspruch 1, **gekennzeichnet durch** eine Regeleinrichtung (9), die den Aktuator (2) in Abhängigkeit geeigneter Parameter regelt.

3. Schlingfederkupplung nach Anspruch 1 oder 2, **dadurch gekennzeichnet, dass** die Kontaktflächen zwischen der Schlingfeder (2) und der ersten Welle (4) mit einer Beschichtung gleicher oder unterschiedlicher Materialien versehen ist.

4. Schlingfederkupplung nach Anspruch 3, **dadurch gekennzeichnet, dass** das Beschichtungsmaterial Papier, Karbon, Sinter oder Molybdän ist.

5. Schlingfeder nach Anspruch 3 oder 4, **dadurch gekennzeichnet, dass** die Kontaktflächen trocken gegeneinander laufen, oder **dadurch gekennzeichnet, dass** die Kontaktflächen in einem Fluid, vorzugsweise Öl, gegeneinander laufen.

6. Schlingfederkupplung nach einem der Ansprüche 1 bis 6, **dadurch gekennzeichnet, dass** der Aktuator (2) in Form eines elektrischen Stellmotors ausgebildet ist, oder dass der Aktuator (2) eine pneumatische, hydraulische, Piezo- oder Magnet-Vorrichtung ist.

7. Schlingfederkupplung nach einem der Ansprüche 1 bis 6, **dadurch gekennzeichnet, dass** die zweite hohle Welle (1) eine Ausnehmung derart aufweist, dass die zweite Welle (1) nur in Wickelrichtung der Schlingfeder (3) gegen sich in entgegengesetzte Richtungen radial erstreckende Schlingfederenden (7, 8) stoßen kann.

8. Schlingfederkupplung nach einem der Ansprüche 1 bis 7, **dadurch gekennzeichnet, dass** sich der Aktuator (2) entweder gegen eine der beiden Wellen (1 bzw. 4) oder gegen ein feststehendes Gehäuseteil abstützt.

9. Schlingfederkupplung nach einem der Ansprüche 1 bis 8, **dadurch gekennzeichnet, dass** der Aktuator (2) an einem Kupplungsgehäuse angeordnet ist.

## Claims

1. A wrap spring clutch (10) comprising
- a first shaft (4);
- a wrap spring (3) which is wound around the first shaft (4) in a winding direction and has two wrap spring ends (7, 8); and
- a second, hollow shaft (1) which is arranged concentrically with the first shaft (4) around the wrap spring (3);
**characterized by**
- an actuator (2) for applying a regulated tangential force on at least one of the wrap spring ends (7, 8) contrary to the winding direction of the wrap spring (3), by which the first shaft (4) and the second shaft (3) can be connected for transmitting an adjustable torque,
whereby intermediate states of the wrap spring (3) between its ON/OFF function are obtainable for reaching a specific slip of the wrap spring.

2. The wrap spring clutch according to claim 1, **characterized by** a controller (9) which controls the actuator (2) in dependence on suitable parameters.

3. The wrap spring clutch according to claim 1 or 2, **characterized in that** the contact surfaces between the wrap spring (3) and the first shaft (4) are provided with a coating of the same or different materials.

4. The wrap spring clutch according to claim 3, **characterized in that** the coating material is paper, carbon, sinter or molybdenum.

5. The wrap spring clutch according to claim 3 or 4, **characterized in that** the contact surfaces run dry in opposite directions, or **characterized in that** the contact surfaces run in opposite directions in a fluid, preferably oil.

6. The wrap spring clutch according to any of claims 1 to 5, **characterized in that** the actuator (2) is in the form of an electric servomotor or that the actuator (2) is a pneumatic, hydraulic, piezo, or magnet device.

7. The wrap spring clutch according to any of claims 1 to 6, **characterized in that** the second, hollow shaft (1) has a recess such that only in the winding direction of the wrap spring (3) can the second shaft (1) butt at wrap spring ends (7, 8) extending radially in opposite directions.

8. The wrap spring clutch according to any of claims 1 to 7, **characterized in that** the actuator (2) rests either against one of the two shafts (1 or 4) or against a stationary housing part.

9. The wrap spring clutch according to any of claims 1 to 8, **characterized in that** the actuator (2) is arranged on a clutch housing.

## Revendications

1. Embrayage à ressort enroulé (10) comportant
- un premier arbre (4);
- un ressort enroulé (3) qui est enroulé dans un sens d'enroulement autour du premier arbre (4) et présente deux extrémités de ressort enroulé (7, 8) ; et
- un deuxième arbre (1) creux qui est agencé autour du ressort enroulé (3) de façon concentrique au premier arbre (4) ;
**caractérisé par**
- un actionneur (2) pour l'application d'une force tangentielle régulée sur au moins l'une des extrémités de ressort enroulé (7, 8) à l'encontre du sens d'enroulement du ressort enroulé (3), avec laquelle le premier arbre (4) et le deuxième arbre (1) peuvent être raccordés l'un à l'autre pour transmettre un couple de rotation réglable,
grâce à quoi il est possible d'atteindre des états intermédiaires du ressort enroulé (3) entre sa fonction de marche/arrêt afin d'obtenir un glissement spécifique du ressort enroulé.

2. Embrayage à ressort enroulé selon la revendication 1, **caractérisé par** un dispositif de réglage (9) réglant l'actionneur (2) en fonction de paramètres appropriés.

3. Embrayage à ressort enroulé selon la revendication 1 ou 2, **caractérisé en ce que** les surfaces de contact entre le ressort enroulé (2) et le premier arbre (4) sont pourvues d'un revêtement en matières identiques ou différentes.

4. Embrayage à ressort enroulé selon la revendication 3, **caractérisé en ce que** la matière du revêtement est du papier, du carbone, du tuf calcaire ou du molybdène.

5. Embrayage à ressort enroulé selon la revendication 3 ou 4, **caractérisé en ce que** les surfaces de contact marchent à sec en sens opposé, ou **en ce que** les surfaces de contact marchent en sens opposé dans un fluide, de préférence de l'huile.

6. Embrayage à ressort enroulé selon l'une des revendications 1 à 6, **caractérisé en ce que** l'actionneur (2) est réalisé sous forme de servomoteur électrique, ou **en ce que** l'actionneur (2) est un dispositif pneumatique, hydraulique, piézoélectrique ou magnétique.

7. Embrayage à ressort enroulé selon l'une des revendications 1 à 6, **caractérisé en ce que** le deuxième arbre (1) creux présente un évidement de sorte que le deuxième arbre (1) puisse buter contre des extrémités de ressort enroulé (7, 8) s'étendant radialement dans des directions opposés, seulement dans le sens d'enroulement du ressort enroulé (3).

8. Embrayage à ressort enroulé selon l'une des revendications 1 à 7, **caractérisé en ce que** l'actionneur (2) prend appui soit sur l'un des deux arbres (1 ou 4), soit sur une pièce de boîtier fixe.

9. Embrayage à ressort enroulé selon l'une des revendications 1 à 8, **caractérisé en ce que** l'actionneur (2) est agencé sur un boîtier d'embrayage.
